# EUROPÄISCHE PATENTSCHRIFT

(11) **EP 4 370 894 B1**
(45) Veröffentlichungstag und Bekanntmachung des Hinweises auf die Patenterteilung: **18.06.2025**
(21) Anmeldenummer: 22746942.6
(22) Anmeldetag: 12.07.2022
(51) Int. Cl.: G01N 1/28

(54) **VERFAHREN UND VORRICHTUNG ZUR HERSTELLUNG EINES FILMFÖRMIGEN TESTKÖRPERS**
METHOD AND DEVICE FOR PRODUCING A FILM-SHAPED TEST BODY
PROCÉDÉ ET DISPOSITIF DE FABRICATION D'UN CORPS D'ESSAI EN FORME DE FILM

(30) Priorität: 16.07.2021 CH 0700742021
(43) Veröffentlichungstag der Anmeldung: 22.05.2024
(73) Patentinhaber: Chemspeed Technologies AG, 4414 Füllinsdorf (CH)
(72) Erfinder: GUELLER, Rolf, 5027 Herznach (CH)
(74) Vertreter: Bohest AG
(86) Internationale Anmeldenummer: PCT/CH2022/050016
(87) Internationale Veröffentlichungsnummer: WO 2023/283747

(56) Entgegenhaltungen:
- CN-A- 110 057 639
- CN-U- 210 037 436
- JP-A- 2002 221 473

## Beschreibung

Die vorliegende Erfindung betrifft ein Verfahren und eine Vorrichtung zur Herstellung eines filmförmigen Testkörpers aus einer verfestigbaren, insbesondere flüssigen Testsubstanz.

In der Forschung und Entwicklung, aber auch in der Qualitätssicherung als Teil des Herstellungsprozesses, ist es massgebend, dass neu entwickelte bzw. neu formulierte oder neu erstellte Stoffe schnell und mit wenig Aufwand getestet, analysiert und miteinander verglichen werden können, um die Stoffvariante(n) zu identifizieren, welche über die gewünschten und angestrebten Stoffeigenschaften verfügen, oder um bei Stoffen im Herstellungsprozess sicherzustellen, dass sie den physikalischen Anforderungen genügen. Die Entwicklung und Formulierung neuer oder die Herstellung bekannter und etablierter Stoffe wird dabei heutzutage in zunehmendem Masse automatisiert, da automatisierte Formulier- und Herstellungsverfahren grosse Vorteile gegenüber händischen, nicht automatisierten Verfahren bieten. Durch die Automatisierung können etwa mit einem vergleichsweise geringeren Aufwand und Ressourcenbedarf neue Substanzen und Stoffe erforscht werden, da die Ansatzmengen üblicherweise kleiner sind als bei traditionellen, händischen Labor-Methoden. Zudem können automatisierte Verfahren auch rund um die Uhr selbstständig laufen, ohne einen menschlichen Arbeiter zu benötigen, der die einzelnen Arbeitsschritte durchführt, und durch die automatisierten Verfahren können zudem auch potentielle menschliche Bedienungsfehler bei der Stoffherstellung weitgehend ausgeschlossen werden.

Um die physikalischen Eigenschaften eines flüssigen, nach dem Auftragen oder Aufbringen härtenden oder trocknenden Stoffs (z.B. Kunststoff, Kleber, Lack,...) zu testen, werden unter anderem auch Zugversuche durchgeführt, bei denen ein aus dem zu testenden Stoff bestehender Testkörper so in die Länge gezogen (gedehnt) wird, bis der Testkörper reisst. Die dabei für einen Testkörper mit definierten Abmessungen (bezüglich Querschnittsfläche) benötigte Kraft bis zum Reissen sowie das dabei gemessene Verhältnis zwischen Länge der Dehnung und aufgewendeter Kraft erlauben Rückschlüsse auf die Zugfestigkeit des Stoffs.

Üblicherweise werden für solche Prüfverfahren die zu prüfenden, noch flüssigen Stoffe auf eine schlecht haftende Oberfläche, wie etwa einen Prüfkarton, aufgetragen und dann nach dem Trocknen/Härten des Stoffs vorsichtig von dieser Oberfläche abgelöst, in eine gewünschte Form geschnitten oder gestanzt und dann auf die Zugfestigkeit geprüft.

Das Auftragen bzw. Applizieren der Testsubstanz auf die Trägeroberfläche erfolgt zum Beispiel durch Aufsprühen der Flüssigkeit, durch DrawDown (Abrakeln der Flüssigkeit mittels einer Rakel), durch Giessen der Testsubstanz direkt auf die Oberfläche oder durch andere Verfahren wie etwa Aufpinseln, Aufstempeln, Spin-Coating oder Aufdampfen.

Nach dem Auftragen wird die Testsubstanz auf der Trägeroberfläche ausgetrocknet oder ausgehärtet und anschliessend von der Trägeroberfläche abgenommen und in eine für die Prüfung geeignete Form (Testkörper) gebracht (z.B. durch Zuschneiden auf eine definierte Grösse und Form oder durch Ausstanzen einer definierten Form).

Die Prüfung selbst besteht im Wesentlichen aus dem Einspannen des Testkörpers an zwei Enden in eine Messvorrichtung (Zugprüfmaschine/Universalprüfmaschine) und dem anschliessenden Voneinanderwegbewegen der beiden Enden, wobei eine Kraft auf den dazwischen eingespannten Testkörper wirkt und der Testkörper gedehnt wird. Die Kraft wird so lange angelegt, bis der Testkörper reisst, und die für die entsprechenden Dehnungslängen wirkenden Kräfte werden aufgezeichnet und üblicherweise als sogenannte Spannungs-Dehnungs-Diagramme dargestellt. Solche Zugprüfmaschinen entsprechen dem aktuellen Standard, sind dem Fachmann bekannt und bedürfen daher keiner weiterführenden Erklärung.

Während sowohl das Aufbringen der Testsubstanz auf ein Substrat (z.B. durch Sprayen, DrawDown, Giessen in eine Form, Spin-Coating, Aufpinseln, ...) als auch das abschliessende Prüfen/Messen des Testkörpers mit heutigen in der Industrie üblichen Vorrichtungen technisch leicht lösbar und automatisierbar sind, gestaltet sich das Ablösen des auf diese Weise hergestellten filmartigen Testkörpers von der Trägeroberfläche des Substrats hingegen als nur schwer automatisierbar, da der entstehende Film sehr leicht beschädigt werden kann. Dieser Ablösevorgang wird deshalb üblicherweise händisch vorgenommen, z.B. indem man eine Ecke des Films mit dem Finger oder durch Einreissen des Substrats anhebt und den Film dann vorsichtig mit den Fingern abzieht.

Für die vollautomatisierte Formulierung/Herstellung, z.B. im Umfeld von Forschung & Entwicklung oder in der Qualitätsprüfung, ist es aber notwendig, auch diesen händischen Schritt des Ablösens des fertigen filmartigen Testkörpers von dessen Unterlage automatisieren zu können.

JP 2002 221473 A bezieht sich auf ein Verfahren bezüglich eines Zug-Dehnungstests, um mechanische Eigenschaften verschiedener dünner Filme, die im Rahmen der Halbleiterfertigung hergestellt werden, messen zu können.

Das erfindungsgemässe Verfahren und die erfindungsgemässe Vorrichtung haben zum Ziel, den Vorgang zur Herstellung eines filmförmigen Testkörpers vollständig, d.h. inklusive der heiklen Ablösung des Films vom Substrat, an dem er haftet, automatisierbar zu machen. Dadurch soll eine Automatisierung von der Herstellung eines filmförmigen Testkörpers bis zur anschliessenden Messung der Zugfestigkeit oder anderer physikalischer und chemischer Eigenschaften ermöglicht werden.

Insbesondere sollen durch die vorliegende Erfindung ein Verfahren und eine Vorrichtung zur Herstellung eines filmförmigen Testkörpers geschaffen werden, die eine Vollautomatisiereung der Herstellung eines filmförmigen Testkörpers möglich machen sollen.

Die der Erfindung zugrunde liegende Aufgabe wird durch das erfindungsgemässe, im unabhängigen Patentanspruch 1 definierte Verfahren und durch die im unabhängigen Patentanspruch 9 definierte Vorrichtung gelöst. Besonders vorteilhafte Weiterbildungen und Ausgestaltungen des erfindungsgemässen Verfahrens und der erfindungsgemässen Vorrichtung sind Gegenstand der jeweils abhängigen Patentansprüche.

Beim erfindungsgemässen Verfahren zur Herstellung eines filmförmigen Testkörpers aus einer verfestigbaren Testsubstanz wird
a) die Testsubstanz auf ein Substrat appliziert, so dass auf dem Substrat ein Substanzfilm gebildet wird;
b) ein Filmablösewerkzeug auf den Substanzfilm aufgesetzt, wobei das Filmablösewerkzeug einen Teilbereich des Substanzfilms frei lässt;
c) der Substanzfilm zu einem Testfilm verfestigt, der am Filmablösewerkzeug haftet;
d) das Filmablösewerkzeug zusammen mit dem daran haftenden Testfilm vom Substrat separiert; und
e) durch den oder aus dem vom Substrat separierten Testfilm der filmförmige Testkörper gebildet.

Durch die Verwendung des speziellen Filmablösewerkzeugs kann der verfestigte Testfilm sehr einfach und leicht vom Substrat gelöst werden, so dass auch die Ablösung des Testfilms vom Substrat einfach automatisiert werden kann.

Gemäss einer vorteilhaften Ausgestaltung des Verfahrens umfasst das Filmablösewerkzeug eine dem Substanzfilm zugewandte Haftfläche, die bezüglich des Testfilms eine grössere Haftfestigkeit als das Substrat aufweist. Alternativ oder zusätzlich wird zwischen der Haftfläche des Filmablösewerkzeugs und dem Substanzfilm ein Haftvermittler appliziert, so dass die Haftfestigkeit zwischen Filmablösewerkzeug und Testfilm grösser ist als zwischen Testfilm und Substrat. Dadurch wird sichergestellt, dass der Testfilm zuverlässig am Filmablösewerkzeug haften bleibt.

Vorteilhafterweise wird der Testkörper durch Zuschneiden oder Stanzen des noch am Filmablösewerkzeug haftenden Testfilms gebildet. Gemäss einer weiteren vorteilhaften Ausführungsform wird der Testfilm vom Filmablösewerkzeug separiert und der Testkörper durch Zuschneiden oder Stanzen des vom Filmablösewerkzeug separierten Testfilms gebildet. Der Testfilm kann dadurch einfach weiterbearbeitet, z.B. auf die gewünschte Form des Testkörpers zugeschnitten oder gestanzt werden.

Bei einer anderen vorteilhaften Ausführungsvariante bildet der vom Substrat separierte, am Filmablösewerkzeug haftende Testfilm den filmförmigen Testkörper, wobei das Filmablösewerkzeug vorzugsweise zwei nicht zusammenhängende Rahmenteile umfasst. Der Testfilm bleibt nach der Separation vom Substrat mit den beiden an ihm haftenden Rahmenteilen verbunden und kann zusammen mit diesen direkt in eine Zugprüfeinrichtung eingesetzt werden.

Bei einer besonders vorteilhaften Ausführungsvariante werden für das Filmablösewerkzeug als Rahmenteile Teile einer Messvorrichtung für den Testkörper eingesetzt. Dadurch entfällt der Zwischenschritt des Einspannens der Rahmenteile in die Messvorrichtung.

Vorzugsweise ist die Testsubstanz eine durch Trocknung, Aushärtung oder Gefrierung verfestigbare Flüssigkeit, beispielsweise Leim oder Farbe. Die Testsubstanz kann vorteilhafterweise auch eine Suspension mit lebenden Zellen, beispielsweise Hautzellen, sein, die bei der Verfestigung eine Zellschicht bildet. Weiters kann die Testsubstanz auch ein Pulver sein, welches durch einen Behandlungsschritt zu einem durchgehenden, vorzugsweise homogenen Festkörper wird.

Hinsichtlich der Vorrichtung besteht das Wesen der Erfindung in Folgendem: Die Vorrichtung zur Herstellung eines filmförmigen Testkörpers aus einer verfestigbaren Testsubstanz umfasst ein Substrat, auf dem aus darauf applizierter Testsubstanz ein Substanzfilm bildbar ist. Die Vorrichtung umfasst weiters ein Filmablösewerkzeug, das eine Haftfläche aufweist, mit der es auf den auf dem Substrat bildbaren Substanzfilm aufsetzbar ist, wobei das Filmablösewerkzeug so geformt ist, dass es einen Teilbereich des Substanzfilms frei lässt.

Durch das speziell ausgebildete Filmablösewerkzeug kann der verfestigte Testfilm sehr einfach und leicht vom Substrat gelöst werden, so dass auch die Ablösung des Testfilms vom Substrat einfach automatisiert werden kann.

Vorteilhafterweise weist die Haftfläche des Filmablösewerkzeugs bezüglich eines durch eine Verfestigung des Substanzfilms erzeugbaren Testfilms eine grössere Haftfestigkeit auf als das Substrat. Dadurch ist eine zuverlässige Ablösung des Testfilms vom Substrat gewährleistet.

Bei vorteilhaften Ausführungsvarianten ist das Filmablösewerkzeug als ein- oder zweiteiliger Rahmen mit einem Fenster ausgebildet, der mit seiner Haftfläche auf den Umfangsbereich des auf dem Substrat bildbaren Substanzfilms aufsetzbar ist, so dass das Fenster einen zentralen Bereich des Substanzfilms frei lässt.

Vorteilhafterweise ist das Filmablösewerkzeug durch Teile einer Messvorrichtung für den Testkörper gebildet, vorzugsweise direkt in die Messvorrichtung integriert. Dadurch wird die Automatisierung des Testvorgangs weiter vereinfacht.

Vorzugsweise umfasst die Vorrichtung
- ein Substrat-Lager für Substrate,
- ein Filmablösewerkzeug-Lager für Filmablösewerkzeuge,
- einen Vorratsbehälter für Testsubstanz und
- einen rechnergesteuerten Manipulator, der dazu ausgebildet ist,
   ein Substrat aus dem Substrat-Lager zu entnehmen und an einem Arbeitsort abzulegen,
   Testsubstanz aus dem Vorratsbehälter zu entnehmen und auf das am Arbeitsort bereit liegende Substrat zu applizieren, so dass auf dem Substrat ein Substanzfilm gebildet wird,
   ein Filmablösewerkzeug aus dem Filmablösewerkzeug-Lager zu entnehmen und auf den auf dem Substrat gebildeten Substanzfilm aufzusetzen, und
   das Filmablösewerkzeug zusammen mit einem daran haftenden, durch Verfestigung des Substanzfilms entstandenen Testfilm vom Substrat zu separieren.

Diese Vorrichtung erlaubt die vollautomatische Durchführung aller Schritte des erfindungsgemässen Verfahrens.

Vorteilhafterweise weist die Vorrichtung ein Aggregat-Lager zur Aufnahme von Aggregaten auf, die jeweils ein Substrat, einen darauf gebildeten Substanzfilm und ein Filmablösewerkzeug umfassen. In diesem Aggregat-Lager können gleichzeitig eine Vielzahl von Aggregaten ausgehärtet bzw. getrocknet und die betreffenden Substanzfilme zu Testfilmen verfestigt werden.

Vorzugsweise ist der Manipulator der Vorrichtung dazu ausgebildet, ein aus Substrat, Substanzfilm und Filmablösewerkzeug bestehendes Aggregat im Aggregat-Lager abzulegen und ein aus Substrat, verfestigtem Testfilm und Filmablösewerkzeug bestehendes Aggregat aus dem Aggregat-Lager zu entnehmen.

Bei einer vorteilhaften Ausführungsvariante umfasst die Vorrichtung ein durch den Manipulator bedienbares Trennwerkzeug, vorzugsweise ein Stanzwerkzeug, mit dem aus dem Testfilm ein Testkörper gewünschter Form ausschneidbar oder ausstanzbar ist.

Im Folgenden werden das erfindungsgemässe Verfahren und die erfindungsgemässe Vorrichtung anhand von in den Zeichnungen dargestellten Ausführungsbeispielen detaillierter beschrieben. Es zeigen:
- Fig. 1-8 -: eine vereinfachte Darstellung des Ablaufs des erfindungsgemässen Verfahrens vom leeren Substrat bis zum fertig erstellten filmförmigen Testkörper;
- Fig. 9-15 -: eine vereinfachte Seitenansicht-Darstellung des Ablaufs des erfindungsgemässen Verfahrens vom leeren Substrat bis zum vom Filmablösewerkzeug entfernten Testfilm;
- Fig. 16 -: ein Ausführungsbeispiel eines erfindungsgemässen Filmablösewerkzeugs;
- Fig. 17 -: ein Ausführungsbeispiel der erfindungsgemässen Vorrichtung zur Herstellung eines filmförmigen Testkörpers mit Testfilm und Stanzlinien für drei Testkörper;
- Fig. 18-20 -: verschiedene Testkörper-Formen;
- Fig. 21 -: ein Beispiel eines Trennwerkzeugs in Form eines Stanzwerkzeugs zum Ausstanzen eines Testkörpers;
- Fig. 22-23 -: zwei mehrteilige Varianten eines Filmablösewerkzeugs, die ein direktes Einspannen in eine Messvorrichtung erlauben bzw. direkt in eine Prüfvorrichtung integrierbar sind;
- Fig. 24 -: eine schematische Skizze einer Messvorrichtung mit einem integrierten Filmablösewerkzeug; und
- Fig. 25 -: stark vereinfacht den prinzipiellen Aufbau einer zur Durchführung des erfindungsgemässen Verfahrens geeigneten erfindungsgemässen Vorrichtung zur Herstellung eines filmförmigen Testkörpers.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

Unter Substrat ist im Rahmen der vorliegenden Erfindung ein üblicherweise, aber nicht zwingend, ebener plattenförmiger Träger zu verstehen, der eine Testsubstanz in Form eines Films aufnehmen kann.

Unter Testsubstanz ist jede, insbesondere flüssige oder pastöse bzw. streichfähige, Substanz zu verstehen, die auf das Substrat so applizierbar ist, dass auf dem Substrat ein Substanzfilm gebildet wird, und die chemisch oder physikalisch verfestigbar ist, z.B. durch Aushärtung oder auch durch simple Trocknung. Grundsätzlich sind aber alle Substanzen möglich, die erst leicht verformbar sind, im Endzustand aber zumindest zu einem gewissen Mass verfestigt sind. Eingeschlossen sind deshalb beispielsweise auch gewisse Pulver, welche sich bei einem Bearbeitungsschritt zu einer festen Schicht verbinden. Grundsätzlich ist das Verfahren aber für alle Substanzen geeignet, welche erst in flüssiger, dann aber nach einem Arbeitschritt oder einer Wartezeit in fester oder zumindest verfestigter Form vorliegen, also beispielsweise auch für Flüssigkeiten, die nach dem Aufbringen auf das Testsubstrat gefroren werden oder ausgelieren. Zudem ist es möglich, beispielsweise auch Zellsuspensionen zu verwenden, wobei sich die Zellen in der Aushärtungsphase zu einer dünnen Zellschicht verbinden, die beispielsweise für die Züchtung und Transplantaion von Hautgewebe Verwendung finden könnte. Ferner kann der Substanzfilm auch durch Sublimation aus einer gasförmigen Substanz erzeugt werden.

Unter Filmablösewerkzeug ist eine aus einem oder mehreren Teilen bestehende Rahmenanordnung mit einer Haftfläche zu verstehen, mit der es auf den auf dem Substrat bildbaren Substanzfilm aufsetzbar ist, wobei es so geformt ist, dass es einen, vorzugsweise zentralen bzw. inneren, Teilbereich des Substanzfilms nicht abdeckt bzw. frei lässt.

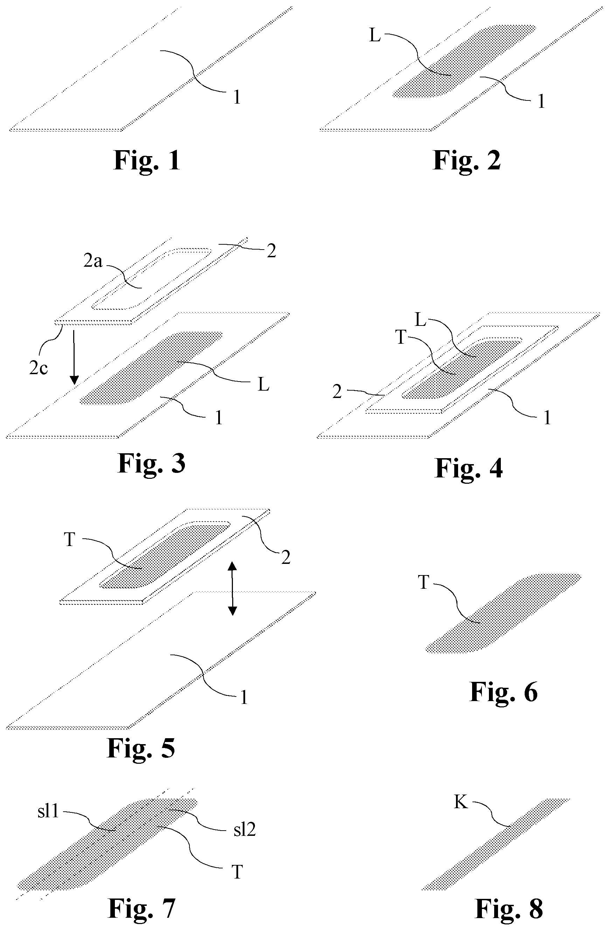

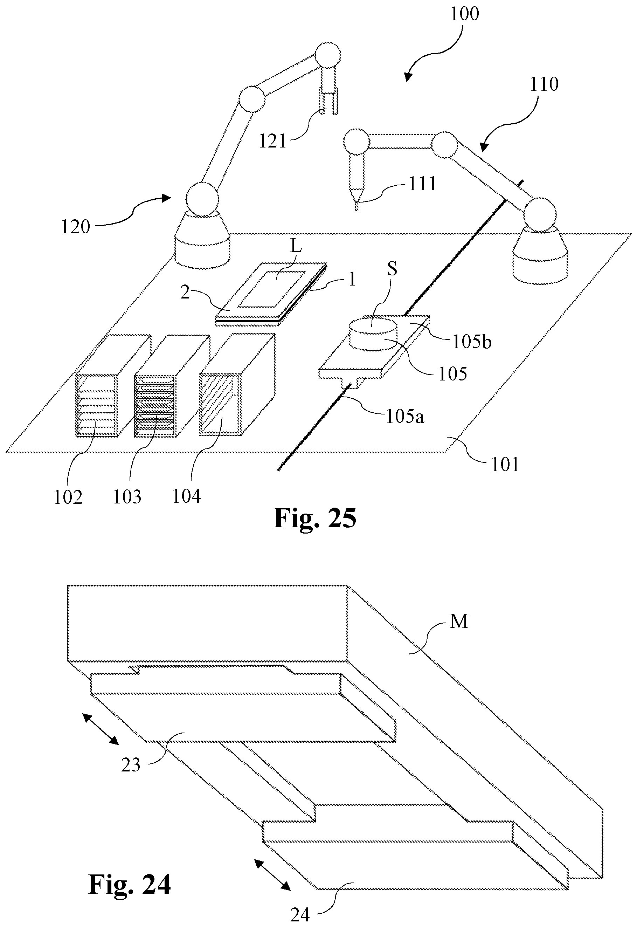

Die Figuren 1 bis 8 stellen stark vereinfacht den Ablauf der Herstellung eines filmförmigen Testkörpers dar, ohne Darstellung der diese Schritte ausführenden Teile eines in Fig. 25 gezeigten beispielsweisen Manipulators.

Fig. 1 zeigt ein leeres plattenförmiges Substrat 1, das als Träger für die später applizierte Testsubstanz, den daraus gebildeten Substanzfilm und schliesslich den verfestigten Testfilm agiert. Das Substrat 1 ist dabei so ausgebildet, dass es für den Testfilm schlecht haftend wirkt. Dazu ist das Substrat z.B. aus einem schlecht haftenden Werkstoff gebildet oder mit einer schlecht haftenden Beschichtung (z.B. aus PTFE) versehen. Die Haftfestigkeit des Substrats bzw. von dessen Oberfläche oder der Beschichtung ist durch grenzflächenenergetische Kräfte bestimmt. Eine Strukturierung der Oberfläche (Oberflächenrauheit) beeinflusst die Haftfestigkeit ebenfalls. Die Oberfläche des Substrats bzw. von dessen Beschichtung soll also unter anderem möglichst glatt sein, um eine möglichst geringe Haftfestigkeit zu erreichen.

Vorteilhafterweise besteht das Substrat 1 beispielsweise aus einer ebenen flexiblen Platte, beispielsweise aus Papier, Karton oder Kunststoff, welche eine schlecht haftende Oberfläche im obigen Sinne aufweist. Diese geringe Haftung kann beispielsweise durch eine geeignete Antihaft-Beschichtung oder einfach durch die Fertigung der entsprechenden Teile aus einem schlecht haftenden Material erreicht werden. Auch bereits eine einfache Plastifizierung einer Papier- oder Kartonplatte kann je nach zu verwendender Substanz bereits den gewünschten Effekt einer geringen Haftung der Testsubstanz bzw. des verfestigten Testfilms auf dem Substrat 1 ermöglichen.

In einer weiteren vorteilhaften Ausführung besteht das Substrat 1 aus einer festen (relativ starren) Platte, beispielsweise aus Karton, Metall, Kunststoff oder Glas, wobei deren Oberfläche auch schlecht haftend ausgebildet ist. Speziell vorteilhaft sind dabei deshalb etwa Platten aus PTFE oder anderen Kunststoffen mit geringer Oberflächenrauheit und geringer Haftfestigkeit.

In einem ersten Schritt des erfindungsgemässen Verfahrens wird die Testsubstanz auf das Substrat 1 appliziert, zum Beispiel durch Abrakeln, Aufsprühen, etc., so dass auf dem Substrat 1 ein Substanzfilm L gebildet wird (Fig. 2). Das Substrat 1 könnte auch mit einer (flachen) Vertiefung ausgebildet sein, in welche die Testsubstanz appliziert wird. Die Applikation der Testsubstanz kann auch durch Sublimation aus der Gasphase erfolgen.

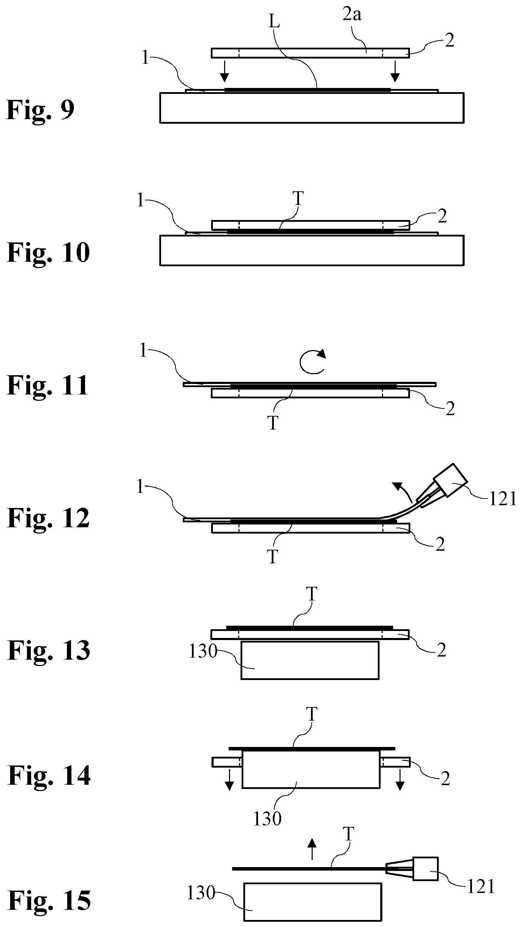

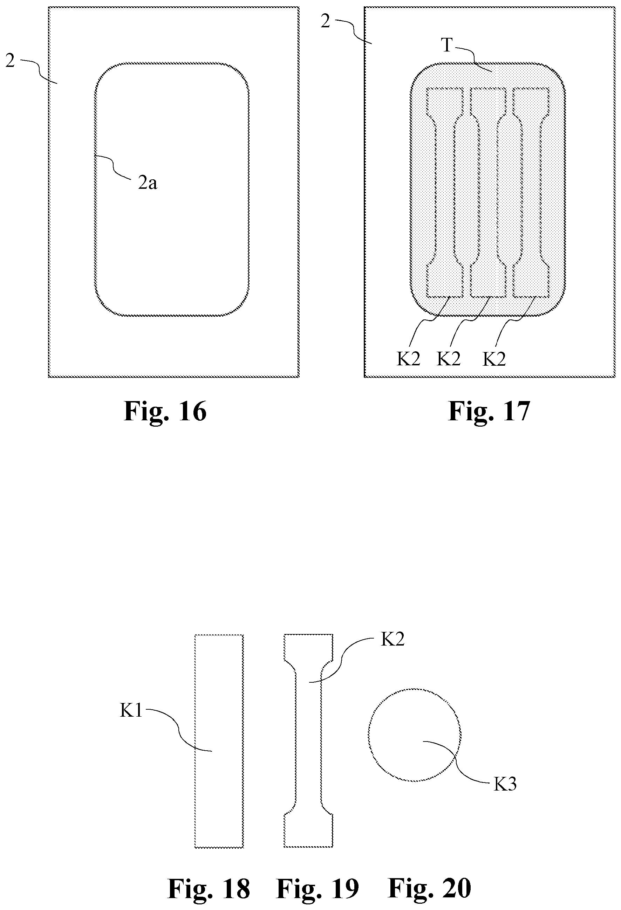

In einem nächsten Schritt wird ein Filmablösewerkzeug über dem Substrat 1 positioniert (Figuren 3 und 9) und auf das Substrat 1 mit dem darauf befindlichen Substanzfilm L aufgesetzt bzw. aufgedrückt (Figuren 4 und 10). Das Filmablösewerkzeug ist in diesem Beispiel als einteiliger, geschlossener ebener Rahmen 2 mit einem Fenster 2a ausgebildet (siehe auch Fig. 16). Das Filmablösewerkzeug bzw. der Rahmen 2 liegt mit seiner ebenen Unterseite bzw. Haftfläche 2c auf dem äusseren Bereich des noch feuchten bzw. noch nicht verfestigten Substanzfilms L in direktem Kontakt auf. Die Oberflächenbeschaffenheit der dem Substanzfilm L zugewandten Haftfläche 2c des Rahmens 2, also der Rahmenseite, welche den Substanzfilm L berührt, ist bezüglich der Testsubstanz relativ gut haftend ausgebildet, wobei die Haftfestigkeit signifikant grösser ist als beim Substrat 1. Dies hat zur Folge, dass nach der Verfestigung (Trocknen/Aushärten) des Substanzfilms L der so entstandene Testfilm T besser am Rahmen 2 haftet als am Substrat 1. Die im Vergleich zum Substrat 1 höhere Haftfestigkeit des Filmablösewerkzeugs bzw. Rahmens 2 kann durch entsprechende Materialwahl und auch durch Oberflächenstrukturierung (Oberflächenrauheit) der Haftfläche 2c erreicht werden. Alternativ oder zusätzlich kann die höhere Haftfestigkeit auch durch Applikation eines Haftvermittlers erreicht werden.

Das Filmablösewerkzeug muss nicht dieselben äusseren Abmessungen wie das Substrat aufweisen. Wesentlich ist lediglich, dass es den auf das Substrat aufgebrachten Substanzfilm überdeckt und dabei einen, vorzugsweise zentralen oder inneren, Teilbereich des Substanzfilms frei lässt.

Das aus dem so mit dem Substanzfilm L beschichteten und mit dem Filmablösewerkzeug bzw. Rahmen 2 versehenen Substrat 1 gebildete Aggregat wird für die Verfestigung (Trocknung/Aushärtung) des Substanzfilms L gelagert. Dies kann beispielsweise in einem dafür geeigneten Aggregat-Lager 104 (Fig. 25) erfolgen, das mit einer oder einer Vielzahl von Lagerpositionen für solche Aggregate ausgestattet ist. Je nach verwendeter Substanz S sind hier Aggregat-Lager vorteilhaft, die über geeignete Vorrichtungen zur Unterstützung der Verfestigung (Trocknung/Aushärtung) verfügen, beispielsweise durch erhöhte Temperatur (Ofenschrank) und oder verbesserte Luftzirkulation bei wasser- oder lösemittelbasierten, an der Luft trocknenden Substanzen, oder UV-Strahlung bei z.B. UV-härtenden Substanzen. Bei der Verarbeitung von Testsubstanzen, die sich von sich aus relativ schnell verfestigen, kann das Aggregat direkt, d.h. ohne Zwischenlagerung, weiter verarbeitet werden.

Durch die Verfestigung (Trocknung/Aushärtung) entsteht aus dem Substanzfilm L ein Testfilm T. Nach der Verfestigung und gegebenenfalls Zwischenlagerung im Aggregat-Lager 104 wird das Filmablösewerkzeug bzw. der Rahmen 2 vom Substrat 1 z.B. durch Anhebung separiert. Da die Haftung des nun verfestigten Testfilms T am Filmablösewerkzeug bzw. Rahmen 2 grösser ist als am Substrat 1, wird auch der Testfilm T zusammen mit dem Filmablösewerkzeug bzw. Rahmen 2 angehoben und vom Substrat 1 entfernt (Figuren 5 und 12). Dabei ist es je nach Ausführungsform so, dass entweder der Rahmen 2 mit dem daran anhaftenden Testfilm T vom Substrat 1 abgehoben wird, oder dass umgekehrt der Rahmen 2 zuerst umgedreht (Fig. 11) und das Substrat 1 dann vom Rahmen 2 mit dem daran anhaftenden Testfilm T entfernt wird, indem es z.B. von einem Greifwerkzeug 121 (Figuren 12 und 25) gegriffen und angehoben wird. Das Filmablösewerkzeug bzw. der Rahmen 2 sowie das Substrat 1 lassen sich leichter greifen als der Testfilm T, so dass die Separation des Testfilms T vom Substrat 1 verhältnismässig einfach automatisierbar ist.

Die Separation des Testfilms T vom Substrat 1 kann auch dadurch erfolgen, dass das Substrat 1 auf chemischen Wege entfernt wird, z.B. durch Ätzung. Dies setzt natürlich die Verwendung eines entsprechenden Substrats voraus.

Das Filmablösewerkzeug bzw. der Rahmen 2 mit dem an ihm haftenden Testfilm T kann nun entweder für die spätere Weiterverwendung in einem dazu geeigneten Zwischenlager eingelagert oder aber direkt weiterverwendet werden.

Für die Weiterverwendung wird der Testfilm T beim dargestellten Ausführungsbeispiel vom Rahmen 2 entfernt (Fig. 6) und zum Beispiel durch Schneiden entlang von Schnittlinien sl1 und sl2 (Fig. 7) in die gewünschte Form des finalen filmförmigen Testkörpers K gebracht (Fig. 8), welcher dann für die hier nicht dargestellte Messung der Zugfestigkeit oder einer anderen physikalischen oder chemischen Prüfmethode verwendet werden kann. In einer vorteilhaften Ausführung wird dafür der Testfilm T zudem mit einer dünnen Pulverschicht, beispielsweise aus Talkumpuder, versehen, was den Testfilm T weiter schützt und das spätere Handling vereinfacht. Die Entfernung des Testfilms T vom Rahmen 2 kann z.B. einfach durch Ausstossen aus dem Rahmen erfolgen, was in den Figuren 13-15 dargestellt ist. Dazu wird der Rahmen 2 mit dem daran haftenden Testfilm T beispielsweise auf einen wie das Fenster 2a geformten Stempel 130 gelegt (Fig. 13) und der Rahmen 2 entlang dem Stemper 130 weiterbewegt (Fig. 14). Dabei hält der Stempel 130 den Testfilm T auf der Unterlage, und der Testfilm T löst sich vom Rahmen 2. Anschliessend kann der Testfilm nach Anheben des Stempels 130 entfernt und weiterverwendet werden (Fig. 15).

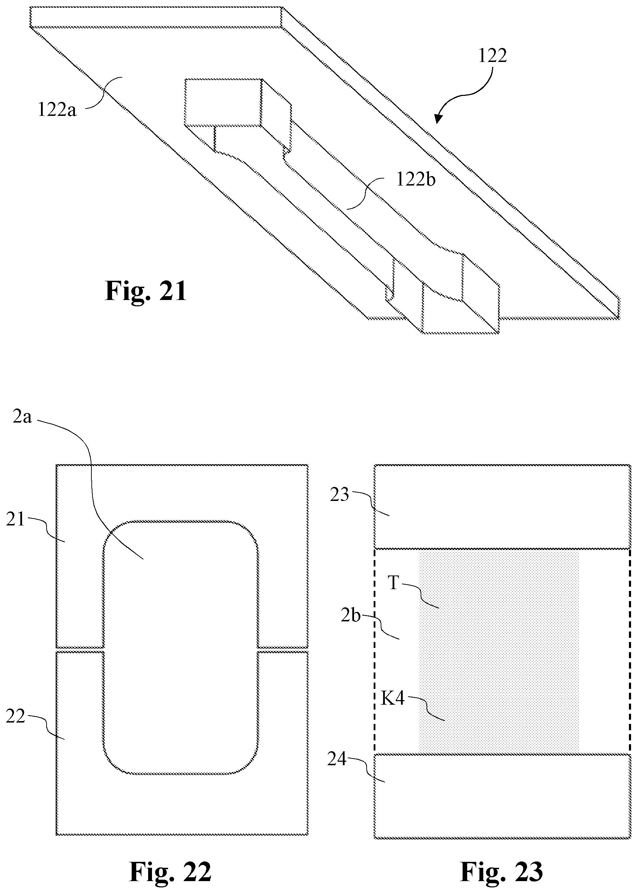

Bei einer alternativen vorteilhaften Ausführungsvariante wird der Testkörper K aus dem Testfilm T nicht ausgeschnitten, sondern mittels eines geeigneten Trennwerkzeugs in Form eines Stanzwerkzeugs (vgl. Fig. 21) in die gewünschte Form des Testkörpers gestanzt. Die Form des Testkörpers K entspricht dabei den bei diesen Anwendungen üblichen Formen und kann je nach Bedarf variieren. Der Testkörper kann beispielsweise rechteckig sein (K1, Fig. 18), aber auch andere, in der Anwendung vorteilhafte Formen aufweisen, wie zum Beispiel ein rechteckiger Steg mit an beiden Enden verbreiterten Stellen (K2, Fig. 19), welche ein gutes Greifen während des Messvorgangs erlauben. Grundsätzlich sind die verschiedensten Formen und Grössen des Testkörpers möglich und je nach Anwendungsgebiet sinnvoll, z.B. auch die Form einer Kreisscheibe (K3, Fig. 20).

Dabei ist es auch möglich, aus einem Testfilm T entweder ein oder auch mehrere entweder gleiche oder auch unterschiedlich geformte Testkörper auszuschneiden bzw. auszustanzen, insbesondere auch ohne dass der Testfilm T zuvor vom Filmablösewerkzeug bzw. Rahmen 2 separiert wird. Bei der in Fig. 17 dargestellten Ausführungsvariante wird der Testfilm T zum Ausschneiden/Ausstanzen nicht vorgängig vom Filmablösewerkzeug bzw. Rahmen 2 entfernt, sondern der Testkörper wird direkt aus dem immer noch vom Filmablösewerkzeug bzw. Rahmen 2 gehaltenen Testfilm T aus dem vom Rahmen 2 freigelassenen Bereich des Testfilms ausgeschnitten/ausgestanzt. Insbesondere werden hier aus dem auf dem Rahmen 2 noch anhaftenden Testfilm T drei filmförmige Testkörper K2 ausgestanzt.

Es ist zudem auch möglich, den Testfilm T auch ohne vorheriges Zuschneiden/Ausstanzen direkt als Testkörper zu verwenden, wenn der Grundriss des ursprünglich gebildeten Substanzfilms für die Messung ausreichend und für den Messvorgang geeignet ist (K4, Fig. 23 und 24). Dies kann zum Beispiel auch für Penetrationsversuche sinnvoll sein.

Bei einer weiteren Ausführungvariante gemäss Fig. 22 ist das Filmablösewerkzeug als zweiteiliger Rahmen ausgebildet, wobei seine beiden Rahmenteile 21 und 22 jeweils eine Seite des Testfilms halten und zwischen sich das den Substanzfilm nicht abdeckende Fenster 2a bilden. In dieser Ausführung können die beiden Rahmenteile 21 und 22 direkt in eine Zugmessvorrichtung eingespannt werden, nachdem der Testfilm T durch Schneiden/Stanzen und Entfernen der nicht benötigen Teile in die gewünschte Form des Testkörpers gebracht wurde. In einer vereinfachten Ausführungsform (Fig. 23) kann das Filmablösewerkzeug auch nur durch zwei z.B. rechteckige Platten 23 und 24 gebildet sein, welche zwischen sich ein Fenster 2b bilden und über den beiden Enden des Substanzfilms bzw. des Testfilms T liegen. Vorteilhafterweise sind die beiden Platten 23 und 24 dabei direkt die gegen einander beweglichen Teile einer in Fig. 24 schematisch dargestellten (Zug-)Messvorrichtung M, so dass der Zwischenschritt des Einspannens der Rahmenteile 23 und 24 in die Messvorrichtung M entfällt. Dies hat den Vorteil, dass es so unmöglich wäre, den Testkörper während des Transports und des Einspannens in die Messvorrichtung zu verlieren oder den hochsensiblen und fragilen Testkörper während dieses Vorgangs zu beschädigen. Bei dieser Variante werden die die Filmablösevorrichtung bildenden Platten 23 und 24 (mitsamt der Messvorrichtung) auf den auf dem Substrat befindlichen Testfilm aufgedrückt. Auch hier wird das Substrat 1 nach der Verfestigung des Testfilms T z.B. mittels eines Greifwerkzeugs 121 abgezogen, wobei der Testfilm an den Platten 23 und 24 der Messvorrichtung M haften bleibt. Ein Ausschneiden oder Ausschneiden entfällt somit, und der Testkörper K entspricht dem ganzen Testfilm T.

Die gemäss den vorstehenden Erläuterungen hergestellten filmförmigen Testkörper stehen dann zur Untersuchung in bekannten Mess-/Prüfvorrichtungen nach physikalischen und gegebenenfalls auch chemischen Prüfverfahren zur Verfügung.

In Fig. 25 ist stark vereinfacht der prinzipielle Aufbau einer zur Durchführung des erfindungsgemässen Verfahrens geeigneten erfindungsgemässen Vorrichtung zur Herstellung eines filmförmigen Testkörpers dargestellt.

Die als Ganze mit 100 bezeichnete Vorrichtung umfasst vorteilhafterweise, aber nicht zwingenderweise, auf einer Grundplatte 101 oder einem Gestell angeordnet ein Substrat-Lager 102, ein Filmablösewerkzeug- bzw. Rahmen-Lager 103, ein Aggregat-Lager 104, einen Vorratsbehälter 105 für Testsubstanz S und einen rechnergesteuerten Manipulator in Form von hier z.B. zwei Robotik-Anordnungen 110 und 120.

Das Substrat-Lager 102 umfasst mehrere Lagerpositionen, in denen Substrate 1 vorrätig gehalten sind. Analog umfasst das Filmablösewerkzeug- bzw. Rahmen-Lager 103 mehrere Lagerpositionen, in denen Filmablösewerkzeuge bzw. Rahmen 2 vorrätig gehalten sind. Das Aggregat-Lager 104 umfasst mehrere Lagerpositionen, die zur Aufnahme von Substraten 1 mit darauf gebildeten Substanzfilmen L und darauf liegenden Filmablösewerkzeugen bzw. Rahmen 2 ausgebildet sind. Das Aggregat-Lager 104 ist vorteilhafterweise mit Vorrichtungen zu Unterstützung der Verfestigung (Trocknung/Aushärtung) der Substanzfilme L ausgestattet. Dazu kann das Aggregat-Lager beispielsweise als Ofenschrank ausgebildet sein sowie Luftzirkulationsmittel und/oder auch Strahlungsquellen, insbesondere UV-Quellen, enthalten. Bei der Verarbeitung von Testsubstanzen, die sich von sich aus relativ schnell verfestigen, kann das Aggregat-Lager 104 entfallen.

Die Robotik-Anordnung 120 umfasst ein Greifwerkzeug 121 und ist dazu ausgebildet, ein Substrat 1 aus dem Substrat-Lager 102 zu entnehmen und an einem Arbeitsort auf der Grundplatte 101 abzulegen. Das Substrat 1 kann dort auf der Grundplatte 101 beispielsweise mittels einer nicht dargestellten Saugvorrichtung örtlich fixiert werden.

Die Robotik-Anordnung 110 umfasst ein Applikationswerkzeug 111 und ist dazu ausgebildet, Testsubstanz S aus dem Vorratsbehälter 105 zu entnehmen und auf das am Arbeitsort bereit liegende Substrat 1 zu applizieren, so dass auf dem Substrat 1 ein Substanzfilm L gebildet wird. Der Vorratsbehälter 105 kann z.B. auf einem längs einer Schiene 105a beweglichen Schlitten 105b angeordnet sein. Das nur symbolisch dargestellte Applikationswerkzeug 111 kann beispielsweise eine Rakelvorrichtung, Sprühvorrichtung, Aufdampfvorrichtung, Stempelvorrichtung, Pinselvorrichtung oder andere, in der Industrie übliche Applikationsvorrichtungen für Flüssigkeiten oder pastöse bzw. streichfähige Substanzen umfassen. Solche geeigneten Vorrichtungen sind dem Fachmann bekannt und sind deshalb hier nicht im Detail erläutert.

Die Robotik-Anordnung 120 ist ferner dazu ausgebildet, ein Filmablösewerkzeug bzw. einen Rahmen 2 aus dem Filmablösewerkzeug- bzw. Rahmen-Lager 103 zu entnehmen und auf den auf dem Substrat 1 gebildeten Substanzfilm L aufzusetzen und eventuell anzupressen.

Weiters ist die Robotik-Anordnung 120 dazu ausgebildet, ein aus Substrat 1, Substanzfilm L und Filmablösewerkzeug bzw. Rahmen 2 bestehendes Aggregat in eine Lagerposition im Aggregat-Lager 104 abzulegen.

Die Robotik-Anordnung 120 ist ferner dazu ausgebildet, ein aus Substrat 1, verfestigtem Testfilm T und Filmablösewerkzeug bzw. Rahmen 2 bestehendes Aggregat aus dem Aggregat-Lager 104 zu entnehmen und das Substrat 1 vom Filmablösewerkzeug bzw. Rahmen 2 mit dem daran haftenden Testfilm T zu separieren, indem das Substrat 1 vom Greifwerkzeug 121 gegriffen und vom Rahmen 2 abgezogen wird (siehe auch Fig. 12).

Ferner kann die Robotik-Anordnung 120 dazu ausgebildet sein, aus dem Testfilm T einen Testkörper K gewünschter Form auszuschneiden oder auszustanzen. Dazu kann die Robotik-Anordnung 120 mit einem geeigneten Schneide- oder Stanzwerkzeug als Trennwerkzeug ausgestattet sein. Ein Beispiel eines Stanzwerkzeugs ist in Fig. 21 dargestellt. Das Stanzwerkzeug 122 umfasst eine Basis 122a und darauf einen Stanzrahmen 122b, dessen Umriss der gewünschten Form des herzustellenden Testkörpers entspricht.

Die vorstehend beschriebenen Funktionen der Robotik-Anordnungen 110 und 120 können beispielsweise auch durch einen rechnergesteuerten Manipulator in Form eines Mehrachsen-Roboters mit Mehrzweck-Werkkopf oder auswechselbaren Werkzeugen realisiert sein.

## Patentansprüche

1. Verfahren zur Herstellung eines filmförmigen Testkörpers (K; K1; K2; K3; K4) aus einer verfestigbaren Testsubstanz (S), bei welchem
a) die Testsubstanz (S) auf ein Substrat (1) appliziert wird, so dass auf dem Substrat (1) ein Substanzfilm (L) gebildet wird;
b) ein Filmablösewerkzeug (2; 21, 22; 23, 24) auf den Substanzfilm (L) aufgesetzt wird, wobei das Filmablösewerkzeug (2; 21, 22; 23, 24) einen Teilbereich des Substanzfilms (L) frei lässt;
c) der Substanzfilm (L) zu einem Testfilm (T) verfestigt wird, der am Filmablösewerkzeug (2; 21, 22; 23, 24) haftet;
d) das Filmablösewerkzeug (2; 21, 22; 23, 24) zusammen mit dem daran haftenden Testfilm (T) vom Substrat (1) separiert wird; und
e) durch den oder aus dem vom Substrat (1) separierten Testfilm (T) der filmförmige Testkörper (K; K1; K2; K3; K4) gebildet wird.

2. Verfahren nach Anspruch 1, **dadurch gekennzeichnet, dass** das Filmablösewerkzeug (2; 21, 22; 23, 24) eine dem Substanzfilm (L) zugewandte Haftfläche (2c) umfasst, die bezüglich des Testfilms (T) eine grössere Haftfestigkeit als das Substrat (1) aufweist.

3. Verfahren nach Anspruch 1 oder 2, **dadurch gekennzeichnet, dass** das Filmablösewerkzeug (2; 21, 22; 23, 24) eine dem Substanzfilm (L) zugewandte Haftfläche (2c) umfasst, zwischen der und dem Substanzfilm (L) ein Haftvermittler appliziert wird, so dass die Haftfestigkeit zwischen Filmablösewerkzeug (2; 21, 22; 23, 24) und Testfilm (T) grösser ist als zwischen Testfilm (T) und Substrat (1).

4. Verfahren nach einem der Ansprüche 1-3, **dadurch gekennzeichnet, dass** der Testkörper (K; K1; K2; K3) durch Zuschneiden oder Stanzen des am Filmablösewerkzeug (2) haftenden Testfilms (T) gebildet wird.

5. Verfahren nach einem der Ansprüche 1-3, **dadurch gekennzeichnet, dass** der Testfilm (T) vom Filmablösewerkzeug (2) separiert wird und dass der Testkörper (K; K1; K2; K3) durch Zuschneiden oder Stanzen des vom Filmablösewerkzeug (2) separierten Testfilms (T) gebildet wird.

6. Verfahren nach einem der Ansprüche 1-3, **dadurch gekennzeichnet, dass** der vom Substrat (1) separierte, am Filmablösewerkzeug (21, 22; 23, 24) haftende Testfilm (T) den filmförmigen Testkörper (K4) bildet, wobei das Filmablösewerkzeug vorzugsweise zwei nicht zusammenhängende Rahmenteile (21, 22; 23, 24) umfasst.

7. Verfahren nach Anspruch 6, **dadurch gekennzeichnet, dass** als Rahmenteile für das Filmablösewerkzeug (23, 24) Teile einer Messvorrichtung (M) für den Testkörper (K1) eingesetzt werden.

8. Verfahren nach einem der Ansprüche 1-7, **dadurch gekennzeichnet, dass** die Testsubstanz (S) eine durch Trocknung, Aushärtung oder Gefrierung verfestigbare Flüssigkeit, eine Suspension mit lebenden Zellen, die bei der Verfestigung eine Zellschicht bildet, oder ein Pulver ist, welches durch einen Behandlungsschritt zu einem durchgehenden Festkörper wird.

9. Vorrichtung zur Herstellung eines filmförmigen Testkörpers (K; K1; K2; K3; K4) aus einer verfestigbaren Testsubstanz (S) mit einem Substrat (1), auf dem aus darauf applizierter Testsubstanz (S) ein Substanzfilm (L) bildbar ist, **gekennzeichnet durch** ein Filmablösewerkzeug (2; 21, 22; 23, 24), das eine Haftfläche (2c) aufweist, mit der es auf den auf dem Substrat (1) bildbaren Substanzfilm (L) aufsetzbar ist, wobei das Filmablösewerkzeug (2; 21, 22; 23, 24) so geformt ist, dass es einen Teilbereich des Substanzfilms (L) frei lässt.

10. Vorrichtung nach Anspruch 9, **dadurch gekennzeichnet, dass** die Haftfläche (2c) des Filmablösewerkzeugs (2; 21, 22; 23, 24) bezüglich eines durch eine Verfestigung des Substanzfilms (L) erzeugbaren Testfilms (T) eine grössere Haftfestigkeit als das Substrat (1) aufweist.

11. Vorrichtung nach Anspruch 9 oder 10, **dadurch gekennzeichnet, dass** das Filmablösewerkzeug als ein- oder zweiteiliger Rahmen (2; 21, 22) mit einem Fenster (2a) ausgebildet ist, der mit seiner Haftfläche (2c) auf den Umfangsbereich des auf dem Substrat (1) bildbaren Substanzfilms (L) aufsetzbar ist, so dass das Fenster (2a) einen zentralen Bereich des Substanzfilms (L) frei lässt.

12. Vorrichtung nach einem der Ansprüche 9-11, **dadurch gekennzeichnet, dass** das Filmablösewerkzeug (23, 24) durch Teile einer Messvorrichtung (M) für den Testkörper (K1) gebildet ist.

13. Vorrichtung nach einem der Ansprüche 9-12, umfassend
- ein Substrat-Lager (102) für Substrate (1),
- ein Filmablösewerkzeug-Lager (103) für Filmablösewerkzeuge (2; 21, 22; 23, 24),
- einen Vorratsbehälter (105) für Testsubstanz (S) und
- einen rechnergesteuerten Manipulator (110, 120), der dazu ausgebildet ist,
ein Substrat (1) aus dem Substrat-Lager (102) zu entnehmen und an einem Arbeitsort abzulegen,
Testsubstanz (S) aus dem Vorratsbehälter (105) zu entnehmen und auf das am Arbeitsort bereit liegende Substrat (1) zu applizieren, so dass auf dem Substrat (1) ein Substanzfilm (L) gebildet wird,
ein Filmablösewerkzeug (2; 21, 22; 23, 24) aus dem Filmablösewerkzeug-Lager (103) zu entnehmen und auf den auf dem Substrat (1) gebildeten Substanzfilm (L) aufzusetzen, und
das Filmablösewerkzeug (2; 21, 22; 23, 24) zusammen mit einem daran haftenden, durch Verfestigung des Substanzfilms (L) entstandenen Testfilm (T) vom Substrat (1) zu separieren.

14. Vorrichtung nach Anspruch 13, **dadurch gekennzeichnet, dass** sie ein Aggregat-Lager (104) zur Aufnahme von Aggregaten aufweist, die jeweils ein Substrat (1), einen darauf gebildeten Substanzfilm (L) und ein Filmablösewerkzeug (2; 21, 22; 23, 24) umfassen.

15. Vorrichtung nach Anspruch 14, **dadurch gekennzeichnet, dass** der Manipulator (110, 120) dazu ausgebildet ist, ein aus Substrat (1), Substanzfilm (L) und Filmablösewerkzeug (2; 21, 22; 23, 24) bestehendes Aggregat im Aggregat-Lager (104) abzulegen und ein aus Substrat (1), verfestigtem Testfilm (T) und Filmablösewerkzeug (2; 21, 22; 23, 24) bestehendes Aggregat aus dem Aggregat-Lager (104) zu entnehmen.

16. Vorrichtung nach einem der Ansprüche 13-15, **dadurch gekennzeichnet, dass** sie ein durch den Manipulator (110, 120) bedienbares Trennwerkzeug, vorzugsweise ein Stanzwerkzeug (122), umfasst, mit dem aus dem Testfilm (T) ein Testkörper (K; K1; K2; K3) gewünschter Form ausschneidbar oder ausstanzbar ist.

## Claims

1. Method for producing a film-shaped test body (K; K1; K2; K3; K4) from a solidifiable test substance (S), wherein
a) the test substance (S) is applied to a substrate (1), so that a substance film (L) is formed on the substrate (1);
b) a film-detachment tool (2; 21, 22; 23, 24) is placed on the substance film (L), the film-detachment tool (2; 21, 22; 23, 24) leaving a sub-region of the substance film (L) uncovered;
c) the substance film (L) is solidified to form a test film (T) which adheres to the film-detachment tool (2; 21, 22; 23, 24);
d) the film-detachment tool (2; 21, 22; 23, 24), together with the test film (T) adhering thereto, is separated from the substrate (1); and
e) the film-shaped test body (K; K1; K2; K3; K4) is formed by or from the test film (T) separated from the substrate (1).

2. Method according to claim 1, **characterised in that** the film-detachment tool (2; 21, 22; 23, 24) comprises an adhesive surface (2c) which faces towards the substance film (L), which adhesive surface exhibits greater adhesiveness towards the test film (T) than does the substrate (1).

3. Method according to claim 1 or 2, **characterised in that** the film-detachment tool (2; 21, 22; 23, 24) comprises an adhesive surface (2c) which faces towards the substance film (L), between which adhesive surface and the substance film (L) there is applied an adhesion promoter, so that the adhesiveness between film-detachment tool (2; 21, 22; 23, 24) and test film (T) is greater than between test film (T) and substrate (1).

4. Method according to any one of claims 1-3, **characterised in that** the test body (K; K1; K2; K3) is formed by cutting or punching the test film (T) adhering to the film-detachment tool (2).

5. Method according to any one of claims 1-3, **characterised in that** the test film (T) is separated from the film-detachment tool (2); and the test body (K; K1; K2; K3) is formed by cutting or punching the test film (T) which has been separated from the film-detachment tool (2).

6. Method according to any one of claims 1-3, **characterised in that** the test film (T) which has been separated from the substrate (1) and is adhering to the film-detachment tool (21, 22; 23, 24) forms the film-shaped test body (K4), the film-detachment tool preferably comprising two non-contiguous frame members (21, 22; 23, 24).

7. Method according to claim 6, **characterised in that** parts of a measuring device (M) for the test body (K1) are used as frame members for the film-detachment tool (23, 24).

8. Method according to any one of claims 1-7, **characterised in that** the test substance (S) is a liquid that is solidifiable by drying, curing or freezing, a suspension containing living cells which forms a cell layer on solidification, or a powder which becomes a continuous solid as a result of a treatment step.

9. Device for producing a film-shaped test body (K; K1; K2; K3; K4) from a solidifiable test substance (S), comprising a substrate (1) on which a substance film (L) can be formed from test substance (S) applied to the substrate, **characterised by** a film-detachment tool (2; 21, 22; 23, 24) having an adhesive surface (2c) with which the tool can be placed on the substance film (L) formable on the substrate (1), the film-detachment tool (2; 21, 22; 23, 24) being shaped so that it leaves a sub-region of the substance film (L) uncovered.

10. Device according to claim 9, **characterised in that** the adhesive surface (2c) of the film-detachment tool (2; 21, 22; 23, 24) exhibits greater adhesiveness towards a test film (T) that can be created by solidification of the substance film (L) than does the substrate (1).

11. Device according to claim 9 or 10, **characterised in that** the film-detachment tool is configured as a one-part or two-part frame (2; 21, 22) having a window (2a), which frame can be placed with its adhesive surface (2c) on the peripheral region of the substance film (L) formable on the substrate (1), so that the window (2a) leaves a central region of the substance film (L) uncovered.

12. Device according to any one of claims 9-11, **characterised in that** the film-detachment tool (23, 24) is formed by parts of a measuring device (M) for the test body (K1).

13. Device according to any one of claims 9-12, comprising
- a substrate storage unit (102) for substrates (1),
- a film-detachment tool storage unit (103) for film-detachment tools (2; 21, 22; 23, 24),
- a supply container (105) for test substance (S) and
- a computer-controlled manipulator (110, 120) which is configured
to remove a substrate (1) from the substrate storage unit (102) and deposit it at a working area,
to remove test substance (S) from the supply container (105) and apply it to the substrate (1) ready-positioned at the working area, so that a substance film (L) is formed on the substrate (1),
to remove a film-detachment tool (2; 21, 22; 23, 24) from the film-detachment tool storage unit (103) and place it on the substance film (L) formed on the substrate (1), and
to separate the film-detachment tool (2; 21, 22; 23, 24), together with a test film (T) adhering thereto, which test film has been formed by solidification of the substance film (L), from the substrate (1).

14. Device according to claim 13, **characterised in that** it has an assembly storage unit (104) for holding assemblies which each comprise a substrate (1), a substance film (L) formed thereon and a film-detachment tool (2; 21, 22; 23, 24).

15. Device according to claim 14, **characterised in that** the manipulator (110, 120) is configured to deposit an assembly consisting of substrate (1), substance film (L) and film-detachment tool (2; 21, 22; 23, 24) in the assembly storage unit (104) and to remove an assembly consisting of substrate (1), solidified test film (T) and film-detachment tool (2; 21, 22; 23, 24) from the assembly storage unit (104).

16. Device according to any one of claims 13-15, **characterised in that** it comprises a separating tool operable by the manipulator (110, 120), preferably a punching tool (122), with which a test body (K; K1; K2; K3) of the desired shape can be cut out or punched out from the test film (T).

## Revendications

1. Procédé de fabrication d'un corps d'essai en forme de film (K ; K1 ; K2 ; K3 ; K4) à partir d'une substance d'essai solidifiable (S), dans lequel
a) la substance d'essai (S) est appliquée sur un substrat (1), de sorte qu'un film de substance (L) se forme sur le substrat (1) ;
b) un outil de décollement de film (2 ; 21, 22 ; 23, 24) est placé sur le film de substance (L), l'outil de décollement de film (2 ; 21, 22 ; 23, 24) laissant à découvert une zone partielle du film de substance (L) ;
c) le film de substance (L) est solidifié en un film d'essai (T) qui adhère à l'outil de décollement de film (2 ; 21, 22 ; 23, 24) ;
d) l'outil de décollement de film (2 ; 21, 22 ; 23, 24) est séparé du substrat (1), conjointement avec le film d'essai (T) qui adhère audit outil ; et
e) le corps d'essai en forme de film (K ; K1 ; K2 ; K3 ; K4) est formé par ou à partir du film d'essai (T) séparé du substrat (1).

2. Procédé selon la revendication 1,
**caractérisé en ce que** l'outil de décollement de film (2 ; 21, 22 ; 23, 24) présente une surface d'adhérence (2c) tournée vers le film de substance (L), laquelle présente une force d'adhérence supérieure à celle du substrat (1) par rapport au film d'essai (T).

3. Procédé selon la revendication 1 ou 2,
**caractérisé en ce que** l'outil de décollement de film (2 ; 21, 22 ; 23, 24) présente une surface d'adhérence (2c) tournée vers le film de substance (L), entre laquelle et le film de substance (L) est appliqué un agent adhésif, de sorte que la force d'adhérence existant entre l'outil de décollement de film (2 ; 21, 22 ; 23, 24) et le film d'essai (T) est supérieure à celle existant entre le film d'essai (T) et le substrat (1).

4. Procédé selon l'une des revendications 1 à 3,
**caractérisé en ce que** le corps d'essai (K ; K1 ; K2 ; K3) est formé par découpage ou poinçonnage du film d'essai (T) adhérant à l'outil de décollement de film (2).

5. Procédé selon l'une des revendications 1 à 3,
**caractérisé en ce que** le film d'essai (T) est séparé de l'outil de décollement de film (2) et **en ce que** le corps d'essai (K ; K1 ; K2 ; K3) est formé par découpage ou poinçonnage du film d'essai (T) séparé de l'outil de décollement de film (2).

6. Procédé selon l'une des revendications 1 à 3,
**caractérisé en ce que** le film d'essai (T) séparé du substrat (1) et adhérant à l'outil de décollement de film (21, 22 ; 23, 24) constitue le corps d'essai en forme de film (K4), l'outil de décollement de film comprenant de préférence deux parties de cadre (21, 22 ; 23, 24) non jointives.

7. Procédé selon la revendication 6,
**caractérisé en ce que** des parties d'un dispositif de mesure (M) pour le corps d'essai (K1) sont utilisées comme parties de cadre pour l'outil de décollement de film (23, 24).

8. Procédé selon l'une des revendications 1 à 7,
**caractérisé en ce que** la substance d'essai (S) est un liquide solidifiable par séchage, durcissement ou congélation, une suspension avec des cellules vivantes qui constitue une couche de cellules lors de la solidification, ou une poudre qui devient un corps solide continu par une étape de traitement.

9. Dispositif pour la fabrication d'un corps d'essai en forme de film (K ; K1 ; K2 ; K3 ; K4) à partir d'une substance d'essai solidifiable (S), comportant un substrat (1) sur lequel un film de substance (L) peut être formé à partir de la substance d'essai (S) appliquée sur ledit substrat,
**caractérisé par** un outil de décollement de film (2 ; 21, 22 ; 23, 24) qui présente une surface d'adhérence (2c) avec laquelle il peut être placé sur le film de substance (L) susceptible d'être formé sur le substrat (1), l'outil de décollement de film (2 ; 21, 22 ; 23, 24) étant formé de manière à laisser à découvert une zone partielle du film de substance (L).

10. Dispositif selon la revendication 9,
**caractérisé en ce que** la surface d'adhérence (2c) de l'outil de décollement de film (2 ; 21, 22 ; 23, 24) présente une force d'adhérence supérieure à celle du substrat (1) par rapport à un film d'essai (T) susceptible d'être produit par une solidification du film de substance (L).

11. Dispositif selon la revendication 9 ou 10,
**caractérisé en ce que** l'outil de décollement de film est réalisé sous la forme d'un cadre (2 ; 21, 22) en une ou deux parties, présentant une fenêtre (2a) et pouvant être placé avec sa surface d'adhérence (2c) sur la zone périphérique du film de substance (L) susceptible d'être formé sur le substrat (1), de sorte que la fenêtre (2a) laisse à découvert une zone centrale du film de substance (L).

12. Dispositif selon l'une des revendications 9 à 11,
**caractérisé en ce que** l'outil de décollement de film (23, 24) est formé par des parties d'un dispositif de mesure (M) pour le corps d'essai (K1).

13. Dispositif selon l'une des revendications 9 à 12, comprenant
- un magasin de substrats (102) pour des substrats (1),
- un magasin d'outils de décollement de film (103) pour des outils de décollement de film (2 ; 21, 22 ; 23, 24),
- un réservoir (105) pour une substance d'essai (S), et
- un manipulateur (110, 120) commandé par ordinateur, qui est conçu pour
prélever un substrat (1) dans le magasin de substrats (102) et le déposer sur un lieu de travail,
prélever une substance d'essai (S) dans le réservoir (105) et l'appliquer sur le substrat (1) mis à disposition sur le lieu de travail, de sorte qu'un film de substance (L) se forme sur le substrat (1),
prélever un outil de décollement de film (2 ; 21, 22 ; 23, 24) dans le magasin d'outils de décollement de film (103) et le placer sur le film de substance (L) formé sur le substrat (1), et
séparer l'outil de décollement de film (2 ; 21, 22 ; 23, 24) du substrat (1), conjointement avec un film d'essai (T) adhérant audit outil et formé par solidification du film de substance (L).

14. Dispositif selon la revendication 13,
**caractérisé en ce qu'**il comprend un magasin d'agrégats (104) destiné à recevoir des agrégats comprenant chacun un substrat (1), un film de substance (L) formé sur celuici et un outil de décollement de film (2 ; 21, 22 ; 23, 24).

15. Dispositif selon la revendication 14,
**caractérisé en ce que** le manipulateur (110, 120) est conçu pour déposer un agrégat, composé du substrat (1), du film de substance (L) et de l'outil de décollement de film (2 ; 21, 22 ; 23, 24), dans le magasin d'agrégats (104) et pour prélever dans le magasin d'agrégats (104) un agrégat composé du substrat (1), du film d'essai solidifié (T) et de l'outil de décollement de film (2 ; 21, 22 ; 23, 24).

16. Dispositif selon l'une des revendications 13 à 15,
**caractérisé en ce qu'**il comprend un outil de séparation, de préférence un outil de poinçonnage (122), pouvant être actionné par le manipulateur (110, 120) et permettant de découper ou de poinçonner un corps d'essai (K ; K1 ; K2 ; K3) de forme souhaitée dans le film d'essai (T).
